# EUROPÄISCHE PATENTANMELDUNG

(11) **EP 1 361 773 A1**
(43) Veröffentlichungstag der Anmeldung: **12.11.2003**
(21) Anmeldenummer: 02024206.1
(22) Anmeldetag: 30.10.2002
(51) Int. Cl.: H04Q 7/38, G01S 5/02, G01S 5/00

(54) **System und Verfahren zur Positionsbestimmung**

(71) Anmelder: SIEMENS AKTIENGESELLSCHAFT, 80333 München (DE)
(72) Erfinder: Bienas, Maik, 30519 Hannover (DE); Gottschalk, Thomas, 12524 Berlin (DE); Schwagmann, Norbert, 38102 Braunschweig (DE)

(57) **Zusammenfassung**

Die vorliegende Erfindung betrifft ein System und Verfahren zur Positionsbestimmung eines mobilen Endgeräts. Das System zur Positionsbestimmung weist ein mobiles Endgerät (MS1, UE), eine Basisstation (BS1), welche geeignet ist, mit dem mobilen Endgerät über eine Funkverbindung zu kommunizieren, Mittel zur Positionsbestimmung des mobilen Endgeräts und Mittel zum Auswählen einer Positionsbestimmungsmethode, nach welcher die Positionsbestimmung des mobilen Endgeräts durchgeführt werden soll, auf. Die Mittel zum Auswählen der Positionsbestimmungsmethode sind in dem mobilen Endgerät angeordnet. In einer bevorzugten Ausführungsform sind die Mittel zum Auswählen einer Positionsbestimmungsmethode geeignet, eine Auswahl aus mindestens zwei angebotenen Positionsbestimmungsmethoden durch den Nutzer des mobilen Endgeräts zu ermöglichen.

## Beschreibung

Die vorliegende Erfindung betrifft ein System und ein Verfahren zur Positionsbestimmung eines mobilen Endgeräts.

Derartige Systeme bzw. Verfahren finden unter Anderem in Mobilfunk-Systemen Anwendung.

Für den Nutzer eines mobilen Endgeräts ist es oft wünschenswert, seine Position bestimmt zu bekommen. Insbesondere bei Mobilfunksystemen der dritten Generation, wie beispielsweise nach dem UMTS (Universal Mobile Telecommunications System) - Mobilfunkstandard arbeitenden Systemen, sollen in den Mobilfunk-Endgeräten Positionsbestimmungsfunktionen integriert werden.

Bei dem UMTS-Standard sind drei Modi für die Übertragungen über die Luftschnittstelle vorgesehen. Dabei handelt es sich um den FDD (Frequency Division Duplex) -Modus, den 3.84 MHz TDD (Time Division Duplex) -Modus und den 1.28 MHz TDD-Modus. Beim FDD-Modus erfolgt die Übertragung in "Up-" und "Downlink" -Richtung auf unterschiedlichen Frequenzen. Up-Link bedeutet dabei die Übertragungsrichtung von einer Mobilstation UE (User Equipment) zu einer Basisstation, d.h. in UMTS einem Netzwerkelement NodeB. Bei Downlink handelt es sich entsprechend um die Übertragungsrichtung von einer NodeB zu der Mobilstation UE. Beim TDD-Modus wird nur eine Trägerfrequenz verwendet, wobei durch Zuweisung von Zeitschlitzen eine Trennung der Up- und Downlink-Richtung erfolgt. Der Hauptunterschied der zwei TDD-Modi liegt in der geringeren Bandbreite des 1.28 MHz TDD-Modus gegenüber dem 3.84 MHz TDD-Modus. Die Teilnehmer werden bei allen Modi über orthogonale Codes getrennt.

Der aktuelle UMTS-Standard (Release 99, Release 4, Release 5) enthält verschiedene Methoden zur Positionsbestimmung eines Mobilfunk-Endgeräts:
- Cell-ID-Methode (FDD, 1.28- und 3.84-TDD, jeweils Release 99) ;
- Assisted-GPS-Methode (FDD, 3.84-TDD, jeweils Release 99);
- OTDOA-Methode (FDD, TDD, jeweils Release 99);
- OTDOA-IPDL (FDD - Release 99, TDD - Release 4).

Bei der Cell-ID-Methode erfolgt die Positionsbestimmung anhand der Erkennung der Mobilfunkzelle, in der sich die Mobilstation zum Zeitpunkt der Positionsanfrage bzw. -bestimmung befindet. Dabei befindet sich in einer Mobilfunkzelle eine Basisstation und eine Mobilstation. Die Basisstation steht mit einem Netzwerkelement S-RNC (Serving Radio Network Controller) in Verbindung. Das S-RNC kann unter Anderem Positionsberechnungsfunktionen ausführen und die Positionsbestimmungsmethode auswählen. Die genaue Funktion des S-RNC wird beispielsweise in der technischen Spezifikation TS 25.305 V4.2.0 des 3GPP (3^{rd} Generation Partnership Project) beschrieben. Bei der Cell-ID-Methode wird der Mittelpunkt der Mobilfunkzelle als Position der Mobilstation angenommen. Diese Art der Positionsbestimmung ist abhängig von der Größe der Mobilfunkzelle und gewährleistet dabei lediglich eine grobe Positionsbestimmung. Die Ungenauigkeiten liegen bei ca. 100 m und mehr. Verbesserungen hinsichtlich der Genauigkeit können durch Zusatzmessungen, wie z.B. Messung der Hin- und Rücklaufzeit RTT (Round Trip Time) erreicht werden. Dabei wird die Laufzeit eines bekannten Signals von der Mobilfunk-Basisstation zur Mobilstation und zurück ausgewertet. Diese Zeitmessung ergibt mathematisch verknüpft mit der Lichtgeschwindigkeit c einen Radius zwischen Mobilfunk-Basisstation und Mobilstation. Somit liegt das zu bestimmende Endgerät nicht nur grob bestimmt in der Mobilfunkzelle, sondern auf einem Kreis RTT in der Mobilfunkzelle.

Bei der Assisted-GPS-Methode erfolgt eine Positionsbestimmung mit aktiver Unterstützung durch GPS. Ein GPS-Empfänger empfängt GPS-Signale von sichtbaren Satelliten. Die Assisted-GPS-Methode liefert eine Genauigkeit der Positionsbestimmung der Mobilstation von ca. 2 bis 5m, ist jedoch in geschlossenen Räumen nur beschränkt einsetzbar.

Die OTDOA (Observed Time Difference of Arrival) -Methode basiert auf Messungen von Signalen über die Luftschnittstelle zwischen mehreren Netzwerkelementen NodeB und der zu lokalisierenden Mobilstation. Gemäß dieser Methode versucht die zu lokalisierende Mobilstation ein Paar eines bekannten Signals von zwei ortsverschiedenen, benachbarten NodeBs zu detektieren und die Empfangszeitpunkte zu bestimmen. Die Empfangszeitpunkte der Signale von zwei ortsverschiedenen, benachbarten NodeBs werden dann zur Auswertung an die zuständige Positionsberechnungsfunktion PCF (Position Calculation Function) derjenigen NodeB gesendet, welche für die zu lokalisierende Mobilstation verantwortlich ist. Auswerten heißt in diesem Zusammenhang, dass die PCF die Zeitdifferenz der Empfangszeiten, d.h. das Δt bildet. Dieses Δt beschreibt einen Hyperboloid, der angibt, dass der Aufenthaltsort der Mobilstation auf einer Hyperbel liegt. Durch die Einbeziehung einer weiteren NodeB befindet sich dann der Aufenthaltsort der Mobilstation an einem der beiden Schnittpunkte der beiden Hyperbeln. Mit der OTDOA-Methode erreicht man eine Genauigkeit der Positionsbestimmung der Mobilstation von ca. 80 bis 100m.

Eine Verbesserung der OTDOA-Methode liefert die OTDOA-IPDL (Idle Period Downlink) -Methode. Die OTDOA-IPDL-Methode ist eine Erweiterung für den Fall, dass die Signale der die Mobilstation bedienenden NodeB die Signale der anderen NodeBs überdecken. Dadurch wird eine Detektion des Signals eine anderen NodeB erschwert und sogar in weiten Teilen der Mobilfunkzelle unmöglich gemacht. Damit eine Detektion von Signalen anderer NodeBs möglich ist, werden bei der OTDOA-IPDL-Methode die Übertragung der NodeB, welche die zu lokalisierende Mobilstation bedient, d.h. die sogenannte Serving-NodeB, für kurze Zeitperioden, d.h. IPDLs ausgeschaltet. Diese entstehenden Ruhepausen hinsichtlich der Übertragung dieser NodeB können dann von der Mobilstation genutzt werden, um die Empfangszeitpunkte der Signale der Nachbar-NodeBs zu detektieren. Die Pause kann mehrere Symbole lang sein, in der Regel 5 bis 10 Symbole. Dabei entspricht die Länge eines Symbols z.B. im FDD-Modus von UMTS 256 Chips und im TDD-Modus maximal 16 Chips, wobei ein Chip ca. 0.26 µs lang ist bei einer Chipfrequenz von 3.84 MChips/s. Aufgrund der Einführung der IPDLs und somit Abschaltung der Übertragung von Signalen der interessierenden NodeB tritt jedoch für die Zeit der IPDLs ein Kapazitäts- bzw. Informationsverlust in der entsprechenden Mobilfunkzelle auf. Mit der OTDOA-IPDL-Methode erreicht man eine Genauigkeit in der Positionsbestimmung von bis zu ca. 20m.

Wie aus der vorstehenden Erläuterung der verschiedenen Positionsbestimmungs-Methoden ersichtlich ist, sind für die jeweiligen Methoden unterschiedliche Signalisierungs- bzw. Berechnungsaufwände notwendig und es ergeben sich dadurch Vorund Nachteile. Für die verschiedenen Positionsbestimmungs-Methoden werden unterschiedliche Ressourcen benötigt und es fallen auch unterschiedliche Kosten an. Für den Nutzer eines mobilen Endgeräts besteht bei bekannten Systemen jedoch keine Möglichkeit, Einfluss auf die Art und Weise der Positionsbestimmung zu nehmen. Entsprechend besteht für den Nutzer eines mobilen Endgeräts, der eine Positionsbestimmungs-Funktion nutzen möchte, nicht die Möglichkeit, auf die Kosten einer Positionsbestimmung Einfluss zu nehmen.

Bei bekannten Systemen kann der Nutzer eines mobilen Endgeräts nicht selbst die Positionsgenauigkeit bzw. die gewollte Ungenauigkeit bestimmen. Er bekommt lediglich vom Netzwerk die Positionsanalyse entsprechend seiner Klientenanfrage und/oder seinen eigenen technischen Möglichkeiten geliefert. Dies führt unter Umständen zu Positionsberechnungen, welche sehr kompliziert oder umfangreich sind, beispielsweise OTDOA, obwohl in einem solchen Fall eventuell die CELL-ID-Methode ausreichend gewesen wäre. Dem mobilen Endgerät, sowie dem Netzwerk allgemein, werden somit unnötige Ressourcen entzogen bzw. beansprucht.

Somit liegt der vorliegenden Erfindung die Aufgabe zugrunde, ein System und ein Verfahren zur Positionsbestimmung eines mobilen Endgeräts bereitzustellen, welches dem Nutzer eines mobilen Endgeräts eine individuelle Positionsbestimmung ermöglicht hinsichtlich Qualität und Kosten.

Diese Aufgabe wird durch ein System zur Positionsbestimmung mit den Merkmalen der unabhängigen Ansprüche 1 bzw. 7, und einem Verfahren zur Positionsbestimmung eines mobilen Endgeräts mit den Merkmalen der unabhängigen Ansprüche 10 bzw. 16 gelöst. Weitere Lösungen der Aufgabe stellen ein mobiles Endgerät gemäß den Ansprüchen 19 und 20 und eine Basisstation gemäß den Ansprüchen 21 und 22 dar. Vorteilhafte Weiterbildungen der vorliegenden Erfindung ergeben sich aus den abhängigen Ansprüchen.

Das System zur Positionsbestimmung eines mobilen Endgeräts weist ein mobiles Endgerät, mindestens eine Basisstation (für die Cell-ID), bevorzugt mindestes 3 (für OTDOA-methoden), welche geeignet ist/sind, mit dem mobilen Endgerät über eine Funkverbindung zu kommunizieren, Mittel zur Positionsbestimmung des mobilen Endgeräts und Mittel zum Auswählen einer Positionsbestimmungsmethode, nach welcher die Positionsbestimmung des mobilen Endgeräts durchgeführt werden soll, auf. Die Mittel zum Auswählen der Positionsbestimmungsmethode sind in dem mobilen Endgerät angeordnet. Bei dem mobilen Endgerät kann es sich grundsätzlich um jede Art von Endgerät, insbesondere einem Mobilfunk-Endgerät, handeln. Weiter bevorzugt handelt es sich um ein Mobilfunk-Endgerät, welches bevorzugt, aber nicht ausschliesslich, nach dem UMTS-Standard arbeitet. Bei der Basisstation handelt es sich bevorzugt um eine UMTS-Basisstation. Erfindungsgemäß kann die Auswahl einer Positionsbestimmungsmethode in dem mobilen Endgerät erfolgen. Bei den angewendeten Positionsbestimmungsmethode kann es sich grundsätzlich um jede Art von Positionsbestimmungsmethoden handeln, welche von dem System unterstützt werden. Bevorzugt werden jedoch die Cell-ID-Methode, die Assisted-GPS-Methode, die OTDOA-Methode, oder die OTDOA-IPDL-Methode verwendet, oder Verfahren, welche Laufzeitmessungen vorraussetzen und/oder unterstützen.

In einer bevorzugten Ausführungsform sind die Mittel zum Auswählen einer Positionsbestimmungsmethode geeignet, eine Auswahl aus mindestens zwei angebotenen Positionsbestimmungsmethoden durch den Nutzer des mobilen Endgeräts zu ermöglichen. Dadurch steht es dem Nutzer des mobilen Endgeräts frei, selbst zu bestimmen, welche Positionsbestimmungsmethode bzw. welche durch die jeweilige Positionsbestimmungsmethode erzielte Genauigkeit er erreichen will. Durch diese Auswahlmöglichkeit kann der Nutzer des mobilen Endgeräts bei einer Positionsbestimmung die ihm anfallenden Kosten kontrollieren. Bei UMTS besteht die Möglichkeit, dass für unterschiedliche Positionsbestimmungsmethoden, verschiedene Kosten berechnet werden. Es kann jedoch für den Nutzer eines mobilen Endgeräts bei einer Positionsbestimmungsanfrage ausreichend sein, eine Positionsbestimmungsmethode mit nur geringerer Genauigkeit auszuwählen, da ihm für die gewünschte Anwendung eine entsprechend weniger präzise Positionsbestimmung ausreichend ist. Durch eine solche gezielte Auswahl fallen ihm geringere Kosten an.

In einer Weiterbildung der vorliegenden Erfindung ist die Basisstation geeignet, dem mobilen Endgerät verfügbare Positionsbestimmungsmethoden zu übermitteln. Die Basisstation kann dem mobilen Endgerät mitteilen, welche Positionsbestimmungsmethoden sie unterstützt bzw. verfügbar sind. Entsprechend kann in dem mobilen Endgerät eine verfügbare Positionsbestimmungsmethode aus der übermittelten Liste von verfügbaren Positionsbestimmungsmethoden durch den Nutzer des mobilen Endgeräts ausgewählt werden.

In eine weiteren Ausführungsform der vorliegenden Erfindung ist das mobile Endgerät geeignet, von diesem unterstützte Positionsbestimmungsmethoden der Basisstation mitzuteilen. Verschiedene mobile Endgeräte können unterschiedliche Positionsbestimmungsmethoden unterstützen. Somit kann vorgesehen sein, dass das mobile Endgerät die von ihm unterstützten Positionsbestimmungsmethoden an die Basisstation weiterleitet. Die Basisstation kann diese Informationen wiederum an das Netzwerkelement S-RNC weiterleiten.

In einer Weiterbildung der vorliegenden Erfindung sind die Mittel zum Auswählen einer Positionsbestimmungsmethode geeignet, bei einer Positionsbestimmungsanfrage an die Basisstation die ausgewählte Positionsbestimmungsmethode als Informationselement mitzusenden.

Bevorzugt sind die Mittel zum Auswählen einer Positionsbestimmungsmethode geeignet, dem Nutzer des mobilen Endgeräts anzuzeigen, welche Positionsbestimmungsmethode für eine jeweilige Anwendung verwendbar ist. Dem Nutzer des mobilen Endgeräts kann beispielsweise angezeigt werden, dass er für eine Navigationsdienstleistung nur eine relativ ungenau Positionsbestimmung benötigt, welche beispielsweise durch die Cell-ID-Methode erzielt werden kann. Entsprechend kann ihm angezeigt werden, dass ihn eine solche Positionsbestimmung einen bestimmten Geldbetrag kostet, wohingegen ihn eine präzisere Positionsbestimmung entsprechend mehr Geld kosten würde.

Die eingangs gestellte Aufgabe wird auch durch ein System zur Positionsbestimmung eines mobilen Endgeräts aufweisend ein mobiles Endgerät, eine Basisstation, welche geeignet ist, mit dem mobilen Endgerät über eine Funkverbindung zu kommunizieren, Mittel zur Positionsbestimmung des mobilen Endgeräts und Mittel zur Verschlechterung der Genauigkeit der Positionsbestimmung, gelöst. Die Mittel zur Verschlechterung der Genauigkeit der Positionsbestimmung sind in dem mobilen Endgerät angeordnet. Bei dem mobilen Endgerät handelt es sich wiederum bevorzugt um ein Mobilfunk-Endgerät, welches bevorzugt, aber nicht ausschliesslich, nach dem UMTS-Standard arbeitet. Die Basisstation kann wiederum mit einem Netzwerkelement S-RNC in Verbindung stehen, wobei die Basisstation bevorzugt den UMTS-Standard unterstützt. Wollen dritte Personen die Position des mobilen Endgeräts bestimmen, so ist erfindungsgemäß ein Mittel zur Verschlechterung der Genauigkeit der Positionsbestimmung vorgesehen, durch welches die Genauigkeit der Positionsbestimmung des mobilen Endgeräts verschlechtert werden kann. Dritte Person, d.h. Personen, die eine Positionsanfrage initiieren, können das mobile Endgerät nicht exakt, sondern nur annähernd orten. Ob die Genauigkeit der Positionsbestimmung durch dritte Personen verschlechtert werden soll, kann in dem mobilen Endgerät, bevorzugt von dem Nutzer des mobilen Endgeräts, eingestellt werden.

Bevorzugt sind die Mittel zur Verschlechterung der Genauigkeit der Positionsbestimmung geeignet, dem Nutzer des mobilen Endgeräts eine Auswahlmöglichkeit bereitzustellen, mit welcher ausgewählt werden kann, ob die Genauigkeit einer von einem Dritten initiierten Positionsbestimmung des mobilen Endgeräts verschlechtert werden soll. Denkbar ist, dass dem Nutzer des mobilen Endgeräts angezeigt wird, dass jemand dessen Position bestimmen will. In Reaktion auf diese Positionsbestimmungsanfrage und/oder grundsätzlich kann der Nutzer des mobilen Endgeräts die Genauigkeit der Positionsbestimmung verschlechtern. Dies hat zur Folge, dass die Position des mobilen Endgeräts nur mit einer geringeren Genauigkeit bestimmt werden kann.

Weiter bevorzugt sind die Mittel zur Verschlechterung der Genauigkeit der Positionsbestimmung geeignet, die Position mittels Signalverfälschung zu verschlechtern.

Die eingangs gestellte Aufgabe wird auch durch ein Verfahren zur Positionsbestimmung eines mobilen Endgeräts, aufweisend die Verfahrensschritte
- Auswählen einer Positionsbestimmungsmethode, nach welcher die Positionsbestimmung eines mobilen Endgeräts durchgeführt werden soll, wobei die Auswahl in dem mobilen Endgerät erfolgt,
- Übermitteln der ausgewählten Positionsbestimmungsmethode an eine Basisstation, und
- Durchführen der Positionsbestimmung des mobilen Endgeräts mit der ausgewählten Positionsbestimmungsmethode,
gelöst.

Eine weitere Lösung der vorliegenden Erfindung ist ein Verfahren zur Positionsbestimmung eines mobilen Endgeräts, aufweisend die Verfahrensschritte
- Initiieren einer Positionsbestimmungsanfrage eines mobilen Endgeräts durch einen Dritten,
- Verschlechterung der Genauigkeit der Positionsbestimmung des mobilen Endgeräts, wobei das Verschlechtern von dem mobilen Endgerät initiiert wird, und
- Durchführen der Positionsbestimmung des mobilen Endgeräts.

Die vorliegende Erfindung betrifft des Weiteren ein mobiles Endgerät zur Verwendung in einem erfindungsgemäßen System und/oder bei einem erfindungsgemäßen Verfahren und eine Basisstation zur Verwendung in einem erfindungsgemäßen System und/oder zur Verwendung bei einem erfindungsgemäßen Verfahren.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: ein Ausführungsbeispiel eine Positionsbestimmung nach der Cell-ID-Methode; und
- Figur 2: ein Ausführungsbeispiel der Signalisierung zwischen einer S-RNC und einer MS1.

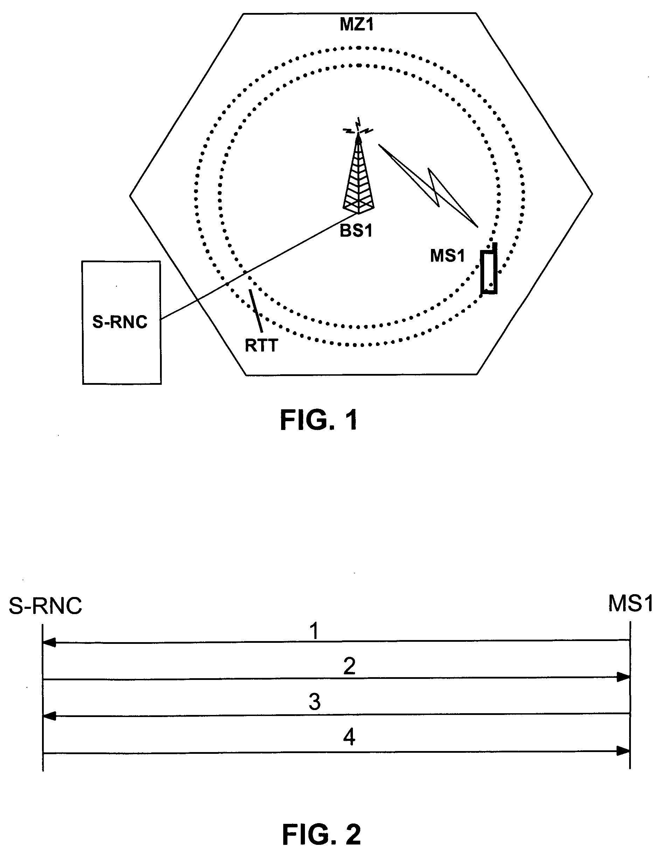

Figur 1 zeigt ein zellulares Mobilfunksystem. Die Basisstation BS1, beispielsweise NodeB in UMTS oder BTS in GSM (Global System for Mobile Communications), spannt eine Mobilfunkzelle MZ1 auf. Innerhalb der Mobilfunkzelle MZ1 steht eine zu lokalisierende Mobilfunkstation MS1 (User Equipment UE in UMTS) in Funkverbindung mit dieser Basisstation BS1. Die gezeigte sechseckige Mobilfunkzelle MZ1 stellt eine Abstraktion, zur besseren Vorstellung, dar. Die Basisstation BS1 ist über eine Festnetzverbindung mit einer physikalischen Kontrolleinheit, der Funknetzwerk-Kontrolleinheit S-RNC (Serving Radio Network Controller), verbunden.

Figur 2 zeigt die entsprechende Signalisierung zwischen S-RNC und Mobilstation MS1. Die Position der Mobilfunkstation MS1 des Nutzers A1 soll bestimmt werden. Für das vorliegende Ausführungsbeispiel wird angenommen, der Nutzer A1 will seine eigene Position bestimmen lassen, um sich zu orientieren. In diesem Fall fungiert MS1 als Klient der Anfrage an den Positionsbestimmungs-Rechner.

Die Positionsbestimmungsanfrage ist in Figur 2 durch den Pfeil 1 gezeigt. Nachdem durch eine entsprechende Kontrolleinheit S-RNC im Mobilfunknetz, welche für die zu lokalisierende MS1 zuständig ist, die Anfrage zur Positionsbestimmung geprüft und zur Durchführung freigegeben worden ist, kann das Mobilfunk-Endgerät MS1 entsprechend seiner Konfiguration alle notwendigen Schritte zur Positionsbestimmung einleiten oder einleiten lassen. Anhand des Profils der Mobilstation erkennt bzw. weiß das S-RNC, dass die Mobilstation MS1 alle OTDOA-Methoden zur Positionsbestimmung unterstützt, d.h. auch OTDOA-IPDL, sowie auch die Module und Software für das Assisted-GPS-System integriert hat. Somit sind Positionsbestimmungen mit Genauigkeiten von 2 bis 5m möglich.

Für eine Positionsbestimmung entsprechend den OTDOA-Methoden muss das Mobilfunk-Endgerät MS1 Signalmessungen zu anderen Mobilfunkzellen, speziell zu mindestens drei Nachbar-Basisstationen, durchführen. In diesem Ausführungsbeispiel koordiniert eine Netzwerk-Kontrolleinheit, d.h. die S-RNC, die durchzuführenden Schritte zum Bestimmen der Position der Mobilfunkstation MS1 und sammelt alle Messergebnisse ein. Für Assisted-GPS sind Informationen über mindestens drei Satelliten, besser vier, notwendig. Dies alles wird durch das S-RNC koordiniert, welches, wenn die Messungen durchgeführt werden, diese dann zur Auswertung an das nicht eingezeichnete MLC (Mobile Location Center) weiterleitet. Diese Einheit berechnet die Position und übermittelt dieses Resultat an die Mobilstation MS1 via S-RNC und NodeB.

Der Nutzer A1 kennt die unterschiedlichen Tarife für Positionsbestimmungen. Diese werden ihm, wie durch den Pfeil 2 in Figur 2 gezeigt, signalisiert. Durch die übermittelten Tariftabellen weiß der Nutzer A1, dass eine Positionsbestimmung mit der einfachen Cell-ID-Methode erheblich billiger ist, aber auch mit ca. 150m Ungenauigkeit (abhängig von der Größe der Mobilfunkzelle) behaftet ist. Die Berechnung mit der erweiterten Cell-ID-Methode unter Zuhilfenahme zusätzlicher einfacher Signale, wie beispielsweise RTT (Round Trip Time), ist etwas teurer, aber auch nur mit ca. 100m Ungenauigkeit behaftet. Positionsbestimmungen mit de OTDOA-Methode und dem Assisted-GPS-System sind die Resourcen-intensivsten und auch teuersten, aber auch mit der geringsten Ungenauigkeit behaftet.

Der Nutzer A1 wählt den billigsten Tarif und damit auch die einfachste Methode, d.h. die einfache Cell-ID-Methode, obwohl er mit seinem mobilen Endgerät die Position bedeutend genauer bestimmen lassen könnte. Diese eher ungenaue Positionsbestimmung reicht A1 jedoch aus, um sich in der Umgebung anhand von unterstützendem, in seinem mobilen Endgerät angezeigtem Kartenmaterial zurechtzufinden bzw. zu orientieren. Die Mitteilung der Positionsbestimmungsmethode ist in Figur 2 durch den Pfeil 3 gezeigt. Anschließend übermittelt die S-RNC an die MS1 die CELL-ID und eventuell Kartenmaterial der Cell-ID-Umgebung, wie dies durch Pfeil 4 der Figur 2 ersichtlich ist. Die Information der Auswahl der Positionsbestimmungsmethode hat die MS1 bei der Anfrage zur Positionsbestimmung als Informationselement des sogenannten QoS (Quality of Standard) zum nicht eingezeichneten LCS-Rechner (Location Service) mitgesandt. Realisiert wurde dies durch eine Menue-Auswahl aus allen verfügbaren Positionsbestimmungsmethoden.

In einem weiteren Ausführungsbeispiel wird von einem Nutzer A1 mit einer Mobilstation MS1 ausgegangen. In diesem Ausführungsbeispiel will nicht nur der Nutzer A1 seine Position bestimmen, sondern die Anfrage kommt von einem externen Teilnehmer, beispielsweise seinem Sohn B2. Dieser will wissen, wo sich sein Vater A1 befindet, um beispielsweise seine Hausaufgaben zu erledigen, bevor sein Vater zu Hause eintreffen könnte. Der Nutzer A1 bekommt signalisiert, dass jemand, in diesem Fall sein Sohn, erkennbar beispielsweise an Telefonnummer und/oder Kennung, seine Position bestimmen will. A1 wählt in diesem Fall per Menü eine Verfälschungsstufe, damit B2 nur ungefähr erkennen kann, wo er sich befindet. Diese Verfälschung der Signalmessungen für die in dem vorliegenden Ausführungsbeispiel verwendete OTDOA-IPDL-Methode wird beispielsweise durch Addition von 2 bis 4ms zu den eigentlichen mindestens drei Messungen zu anderen NodeBs realisiert. Damit verschlechtert sich das eigentliche Resultat erheblich, so dass der Nutzer B1 die Mobilstation MS1 bzw. den Nutzer A1 nicht exakt orten kann.

In einem weiteren Ausführungsbeispiel wird angenommen, dass ein Nutzer C3 mit einem mobilen Endgerät MS3 in staatlichen Gewahrsam genommen werden soll. Da sich der Nutzer C3 in der Umgebung, in der er sich aufhält, nicht auskennt, möchte er sich mittels seines mobilen Endgeräts und dem darauf angezeigten Kartenmaterial orientieren. Dazu benötigt er seine Position zu unterschiedlichen Zeitpunkten. Die staatlichen Organe, hier die Polizei P1, will verhindern, dass ein Zugriff auf C3 erfolglos bleibt. P1 arbeitet mit dem Mobilfunkbetreiber für MS3 zusammen und sorgt dafür, dass C3 seine Positions-Informationen sehr ungenau und verspätet übermittelt bekommt. Gleichzeitig lässt P1 die Position von C3 so genau wie möglich bestimmen. Dadurch erhält P1 einen zeitlichen Vorsprung, welcher es P1 ermöglicht, einen Zugriff auf C3 durchzuführen.

Durch die vorliegende Erfindung wird eine benutzerdefinierte Bestimmung der Positionsgenauigkeit, unabhängig von den technischen Möglichkeiten des mobilen Endgeräts des Nutzers, jedoch abhängig von den persönlichen Optionen, Verhalten, Wünschen, Ansprüchen des Benutzers ermöglicht. Entsprechend wird eine Einführung von neuen Vergebührungsmodellen entsprechend der benutzerdefiniert eingestellten Positionsgenauigkeit ermöglicht.

Des Weiteren können durch die vorliegende Erfindung Signalisierungsressourcen bei Auswahl von weniger umfangreichen Positionsbestimmungsmethoden eingespart bzw. reduziert werden. Auch die Batterieleistung des mobilen Endgeräts wird bei Auswahl von weniger umfangreichen Positionsbestimmungsmethoden eingespart bzw. reduziert. Des Weiteren können auch Systemressourcen der Berechnung von Positionen mobiler Endgeräte bei Auswahl von weniger umfangreichen Positionsbestimmungsmethoden eingespart bzw. reduziert werden. Darüber hinaus wird durch die vorliegende Erfindung eine exakte Bezeichnung des gewünschten sogenannten QoS-Parameters (Quality of Standard) ermöglicht. Des Weiteren können neue Informationselemente in bestehende Positionsbestimmungsprozeduren eingeführt werden. Abhängig von neuen Vergebührungsmodellen können spezielle Protokoll-Signalisierungen hinsichtlich des gewünschten QoS eingeführt werden. Darüber hinaus können neue Vergebührungsmodelle benutzerspezifisch gestaltet werden. Beispielsweise kann der Benutzer auf Wunsch entsprechend den Vergebührungsmodellen seines Netzwerkbetreibers eine ungenauere Positionsbestimmungsmethode auswählen. Letztendlich können durch die vorliegende Erfindung Prozeduren eingeführt werden, welche es staatlichen Organen, wie beispielsweise Polizei, Landeskriminalamt oder Bundeskriminalamt, erlauben, Positionsbestimmungsanalysen von Nutzern aufgrund von staatlichen Anordnungen negativ zu beeinflussen.

## Patentansprüche

1. System zur Positionsbestimmung eines mobilen Endgeräts, aufweisend:
- ein mobiles Endgerät (MS1, UE),
- eine Basisstation (BS1), welche geeignet ist, mit dem mobilen Endgerät über eine Funkverbindung zu kommunizieren, und
- Mittel zur Positionsbestimmung des mobilen Endgeräts,
**gekennzeichnet durch**
Mittel zum Auswählen einer Positionsbestimmungsmethode, nach welcher die Positionsbestimmung des mobilen Endgeräts durchgeführt werden soll, wobei die Mittel zum Auswählen der Positionsbestimmungsmethode in dem mobilen Endgerät angeordnet sind.

2. System gemäß Anspruch 1,
**dadurch gekennzeichnet, dass**
die Mittel zum Auswählen einer Positionsbestimmungsmethode geeignet sind, eine Auswahl aus mindestens zwei angebotenen Positionsbestimmungsmethoden durch den Nutzer des mobilen Endgeräts zu ermöglichen.

3. System gemäß einem der vorhergehenden Ansprüche,
**dadurch gekennzeichnet, dass**
die Basisstation geeignet ist, dem mobilen Endgerät verfügbare Positionsbestimmungsmethoden zu übermitteln.

4. System gemäß einem der vorhergehenden Ansprüche,
**dadurch gekennzeichnet, dass**
das mobile Endgerät geeignet ist, von diesem unterstützte Positionsbestimmungsmethoden der Basisstation mitzuteilen.

5. System gemäß einem der vorhergehenden Ansprüche,
**dadurch gekennzeichnet, dass**
die Mittel zum Auswählen einer Positionsbestimmungsmethode geeignet sind, bei einer Positionsbestimmungsanfrage an die Basisstation, die ausgewählte Positionsbestimmungsmethode als Informationselement mitzusenden.

6. System gemäß einem der vorhergehenden Ansprüche,
**dadurch gekennzeichnet, dass**
die Mittel zum Auswählen einer Positionsbestimmungsmethode geeignet sind, dem Nutzer des mobilen Endgeräts anzuzeigen, welche Positionsbestimmungsmethode für eine jeweilige Anwendung verwendbar ist.

7. System zur Positionsbestimmung eines mobilen Endgeräts, aufweisend:
- ein mobiles Endgerät (MS1, UE),
- eine Basisstation (BS1), welche geeignet ist, mit dem mobilen Endgerät über eine Funkverbindung zu kommunizieren, und
- Mittel zur Positionsbestimmung des mobilen Endgeräts,
**gekennzeichnet durch**
Mittel zur Verschlechterung der Genauigkeit der Positionsbestimmung, wobei diese in dem mobilen Endgerät angeordnet sind.

8. System gemäß Anspruch 7,
**dadurch gekennzeichnet, dass**
die Mittel zur Verschlechterung der Genauigkeit der Positionsbestimmung geeignet sind, dem Nutzer des mobilen Endgeräts eine Auswahlmöglichkeit bereitzustellen, mit welcher ausgewählt werden kann, ob die Genauigkeit einer von einem Dritten initiierten Positionsbestimmung des mobilen Endgeräts verschlechtert werden soll.

9. System gemäß einem der Ansprüche 7 oder 8,
**dadurch gekennzeichnet, dass**
die Mittel zur Verschlechterung der Genauigkeit der Positionsbestimmung geeignet sind, die Positionsbestimmung mittels Signalverfälschung zu verschlechtern.

10. Verfahren zur Positionsbestimmung eines mobilen Endgeräts, aufweisend die Verfahrensschritte:
- Auswählen einer Positionsbestimmungsmethode, nach welcher die Positionsbestimmung eines mobilen Endgeräts durchgeführt werden soll, wobei die Auswahl in dem mobilen Endgerät erfolgt,
- Übermitteln der ausgewählten Positionsbestimmungsmethode an eine Basisstation (BS1), und
- Durchführen der Positionsbestimmung des mobilen Endgeräts (MS1, UE) mit der ausgewählten Positionsbestimmungsmethode.

11. Verfahren gemäß Anspruch 10,
**dadurch gekennzeichnet, dass**
die Auswahl aus mindestens zwei verfügbaren Positionsbestimmungsmethoden durch den Nutzer des mobilen Endgeräts erfolgt.

12. Verfahren gemäß einem der Ansprüche 10 oder 11,
**dadurch gekennzeichnet, dass**
verfügbare Positionsbestimmungsmethoden von der Basisstation (BS1) an das mobile Endgerät (MS1, UE) übermittelt werden.

13. Verfahren gemäß einem der Ansprüche 10 bis 12,
**dadurch gekennzeichnet, dass**
das mobile Endgerät dessen unterstützende Positionsbestimmungsmethoden der Basisstation mitteilt.

14. Verfahren gemäß einem der Ansprüche 10 bis 13,
**dadurch gekennzeichnet, dass**
bei einer Positionsbestimmungsanfrage von dem mobilen Endgerät an die Basisstation, die ausgewählte Positionsbestimmungsmethode als Informationselement mitgesendet wird.

15. Verfahren gemäß einem der Ansprüche 10 bis 14,
**dadurch gekennzeichnet, dass**
dem Nutzer des mobilen Endgeräts angezeigt wird, welche Positionsbestimmungsmethode für eine jeweilige Anwendung verwendbar ist.

16. Verfahren zur Positionsbestimmung eines mobilen Endgeräts, aufweisend die Verfahrensschritte:
- Initiieren einer Positionsbestimmungsanfrage eines mobilen Endgeräts (MS1, UE) durch einen Dritten,
- Verschlechtern der Genauigkeit der Positionsbestimmung des mobilen Endgeräts (MS1, UE), wobei das Verschlechtern von dem mobilen Endgerät initiiert wird, und
- Durchführen der Positionsbestimmung des mobilen Endgeräts (MS1, UE).

17. Verfahren gemäß Anspruch 16,
**dadurch gekennzeichnet, dass**
dem Nutzer des mobilen Endgeräts eine Auswahlmöglichkeit bereitgestellt wird, mit welcher er auswählen kann, ob die Genauigkeit der durch den Dritten initiierten Positionsbestimmung des mobilen Endgeräts verschlechtert werden soll.

18. Verfahren gemäß einem der Ansprüche 16 oder 17,
**dadurch gekennzeichnet, dass**
die Verschlechterung der Genauigkeit der Positionsbestimmung mittels Signalverfälschung erfolgt.

19. Mobiles Endgerät zur Verwendung in einem System nach einem der Ansprüche 1 bis 9.

20. Mobiles Endgerät zur Verwendung bei einem Verfahren nach einem der Ansprüche 10 bis 18.

21. Basisstation zur Verwendung in einem System nach einem der Ansprüche 1 bis 9.

22. Basisstation zur Verwendung bei einem Verfahren nach einem der Ansprüche 10 bis 18.
